# EUROPEAN PATENT APPLICATION

(11) **EP 4 851 510 A1**
(43) Date of publication of application: **09.12.2026**
(21) Application number: 25180136.1
(22) Date of filing: 02.06.2025
(51) Int. Cl.: F16L 3/137, F16B 5/06, F16B 19/10, F16L 3/233, F16B 2/08

(54) **A CABLE TIE CLIP AND A VEHICLE COMPRISING SUCH A CABLE TIE CLIP**

(71) Applicant: Volvo Truck Corporation, 405 08 Göteborg (SE)
(72) Inventor: SCHÖN, Niklas, 412 83 Göteborg (SE)
(74) Representative: Zacco Sweden AB

(57) **Abstract**

A cable tie clip 10 configured to receive a cable tie 6 for tying a tubular object to a structural element having a hole. The cable tie clip comprises a first expandable part 20 and a second central part 50. The first expandable part 20 has a first leading portion 22. The second central part 50 has a second leading portion 52 extending axially through the first leading portion. A second trailing portion 54 of the second central part comprises an opening 56 for a cable tie. A retracting force by the received cable tie causes the second central part to be retracted relative to the first expandable part, wherein retraction of the second central part causes the second leading portion to radially expand the first leading portion from an initial state, in which it has an initial radial extension, to a radially expanded state in which the first leading portion has a larger radial extension than the initial radial extension.

## Description

### TECHNICAL FIELD

The disclosure relates generally to a cable tie clip. **In** particular aspects, the disclosure relates to a cable tie clip configured to receive a cable tie for tying a tubular object, such as a cable or a pipe, to a structural element having a hole. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Cable ties are commonly used to tie down cables and hoses in vehicles. To this end, cable tie holders are provided for holding the cable ties. The cable tie holders are often installed into a hole in a structure to which the cables or hoses are to be tied. A drawback with such cable tie holders is that they need quite a high push-in force to be properly installed. This causes an ergonomical problems for the operator. It may also cause quality problems if the cable tie holders are not installed correctly.

### SUMMARY

According to a first aspect of the disclosure, there is provided a cable tie clip configured to receive a cable tie for tying a tubular object, such as a cable or a pipe, to a structural element having a hole. The cable tie clip comprises:
- a first expandable part having a first leading portion and a first trailing portion, wherein the first leading portion is configured to be inserted in an axial forward direction through the hole of the structural element, the first leading portion being provided in an initial state in which the first leading portion has an initial radial extension, wherein the first trailing portion has a larger radial extension than said initial radial extension of the first leading portion,
- a second central part having a second leading portion and a second trailing portion, wherein the second leading portion extends axially through the first leading portion, wherein the second central part is retractable in an axial rearward direction which is opposite to said axial forward direction, wherein the second trailing portion comprises an opening enabling a cable tie to be passed through the opening and enabling a retracting force by the received cable tie to cause the second central part to be retracted relative to the first expandable part, wherein retraction of the second central part causes the second leading portion to radially expand the first leading portion from said initial state to a radially expanded state in which the first leading portion has a larger radial extension than said initial radial extension. The first aspect of the disclosure may seek to facilitate the installation of cable tie holder, by making it in the form of a cable tie clip which is simple to install, yet robust in the long term. A technical benefit may include that the required push-in force for the cable tie clip may be very low due to the initial radial extension of the first leading portion, but the cable tie clip can still withstand high pull-out forces in a satisfactory manner due to the radial expansion of the first leading portion caused by the retraction of the second leading portion. The second leading portion which can be retracted when the cable tie is being tied, thus has the ability to activate an anchoring function for the first leading portion, thereby securing the cable tie clip for long term usage. Furthermore, since such activation can be provided automatically by the retracting force caused by tying a cable tie, there is no need for a separate retracting action for the operator installing the cable tie clip. The operator can simply push-in the leading portions of the cable tie clip into the hole of the structural element, and then tie the tubular object to the structural element by means of a cable tie passed through the opening of the cable tie clip. Tightening of the cable tie will cause the cable tie clip to become properly anchored.

The cable tie clip may come in various sizes, depending on the particular implementation and the dimension of the cable tie it is intended for. Furthermore, depending on the size of the hole of the structural element to which the cable tie clip is to be installed, a cable tie clip may be selected which has a first leading portion suitably dimensioned to be inserted into the hole, i.e. having an initial state in which the initial radial extension is smaller than the diameter of the hole, and a radially expanded state in which the radial extension is larger than the diameter of the hole. Hereby, the first leading portion can be prevented from being retracted through the hole. Similarly, the selected cable tie clip should have a first trailing portion which is overdimensioned relative to the hole so as to prevent continued insertion of the first expandable part through the hole.

Optionally in some examples, including in at least one preferred example, the first trailing portion may have an object-supporting surface configured to receive a tubular object to be tied to the structural element, wherein the second trailing portion may have a trailing end which presents the most rearward surface of the second trailing portion, wherein the entire object-supporting surface, or at least one area of the object-supporting surface, may be located rearwardly of the trailing end of the second trailing portion. A technical benefit may include that, by having such a separating distance between the object-supporting surface and the trailing end of the second trailing portion, the object-supporting surface is allowed to provide a lever effect to the cable tie when the cable tie is tightened. Hereby, a lifting/retracting force may be provided to the second central part, enabling it to cause the first leading portion of the first expandable part to reach its radially expanded state.

Optionally in some examples, including in at least one preferred example, the first trailing portion has a trailing end which presents the most rearward surface of the first trailing portion, wherein the object-supporting surface is said most rearward surface of the first trailing portion. Similarly, to what has been mentioned above, a technical benefit may include that the trailing end of the first trailing portion may allow for a lever effect to be achieved when a cable tie is tightened, causing a retracting force to the second central part.

Optionally in some examples, including in at least one preferred example, tightening of a tubular object received on said object-supporting surface, by a cable tie received through the opening of the second trailing portion, may allow the second central part to become retracted in the axial rearward direction to an extent that the object-supporting surface remains located rearwardly of the trailing end of the second trailing portion or to an extent that the trailing end of the second trailing portion becomes levelled with the object-supporting surface. A technical benefit may include that hereby the tubular object can be securely tightened to the object-supporting surface.

Optionally in some examples, including in at least one preferred example, said object-supporting surface may be concave. A technical benefit may include that this also improves the support and the securing of the tubular object. Furthermore, the concave surface may make it easier to keep the tubular object in place before the cable tie is tightened.

Optionally in some examples, including in at least one preferred example, said object-supporting surface of the first trailing portion may be a first object-supporting surface, wherein the most rearward surface of the second trailing portion may present a second object-supporting surface, wherein the second object-supporting surface may be concave and configured to contribute to supporting a tubular object supported by the first object-supporting surface. A technical benefit may include that this may allow for more tight installation. Thus, when the second central part is retracted, the second object-supporting surface may come into contact with the tubular object and thereby contribute to supporting the tubular object.

Optionally in some examples, including in at least one preferred example, upon retraction of the second central part causing the second leading portion to radially expand the first leading portion, the second object-supporting surface may be retracted to a position in which it is flush with at least one area of the first object-supporting surface, wherein the second object-supporting surface may present a concavity having the same radius of curvature as the concavity presented by said at least one area of the first object-supporting surface. Similarly to what has been mentioned above, a technical benefit may include that this may allow for more tight installation.

Optionally in some examples, including in at least one preferred example, the first trailing portion may comprise an intermediate base section arranged between two rearwardly projecting wall sections, wherein the second central part extends axially through the intermediate base section. A technical benefit may include that by having the second central part extending between rearwardly projecting wall section of the first trailing portion, a well-balanced configuration may be provided, allowing a tubular object to be supported on either side of the second central part, which may be beneficial when the second central part is subjected to a retracting force during tightening of a cable tie.

Optionally in some examples, including in at least one preferred example, in a geometrical plane through the first trailing portion, the first trailing portion may present a U-shaped cross-section, the two rearwardly projecting wall sections representing the legs of the U-shape and the intermediate base section representing the base of the U-shape, wherein the opening of the second trailing portion is facing a direction which is perpendicular to said geometrical plane. A technical benefit may include that a cable tie may extend substantially perpendicularly to the main extension a tubular object to be tied down. In particular, the tubular object that is about to be tied down may extend over one of the legs of the U-shape, across the base of the U-shape, and then onto and beyond the other leg of the U-shape. Hereby, a secure tightening may be achieved. In other examples, the first trailing portion may present a V-shaped cross-section, the two rearwardly projecting wall sections representing the legs of the V-shape and the intermediate base section representing the bottom of the V-shape. Technical benefits may correspond to those of a trailing portion having a U-shaped cross-section.

Optionally in some examples, including in at least one preferred example, the second leading portion may be provided with a forwardly and radially flaring section, wherein retraction of the second central part may cause said forwardly and radially flaring section to press the first leading portion radially from said initial state to said radially expanded state. A technical benefit may include that such a forwardly and radially flaring section will effectively press the first leading portion in a radial direction upon retraction of the second central part, as the contact fore at the interface between the two leading portions will have a radial force component. In other examples it would be conceivable to provide the first leading portion with a forwardly and radially flaring inner geometry, and the second leading portion could be flaring or non-flaring. In either case, when the second central part would be retracted, it would press the inner geometry and analogously to above, provide a radially directed force component, resulting in moving the first leading portion to said radially expanded state. Therefore, in a general sense, according to at least some examples of this disclosure, at least one of the first and second leading portions may be provided with a forwardly and radially flaring section, wherein retraction of the second central part may cause said radially flaring section to press or to be pressed, causing the first leading portion to move radially from said initial state to said radially expanded state.

Optionally in some examples, including in at least one preferred example, the first leading portion may have a leading end which presents the most forward surface of the first leading portion, wherein the first leading portion is provided with at least one slit, such as at least two slits, extending from said leading end in the axial rearward direction. A technical benefit may include that said at least one slit facilitates radial expansion of the first leading portion. Such a slit may also function as a guide to the second central part, or to provide an anti-rotational function. For example, the second trailing portion may be provided with a radially extending rib which may fit into said slit, creating an anti-rotational stop (and/or enabling an axial guiding during tightening of the cable tie and retraction of the second central part). Hereby, the risk of the tubular object starting to turn (and thus risking loosing some of the tightening fore that holds it down) can be counteracted. Furthermore, the risk of inadvertent skewing of the second central part relative to the first expandable part may be reduced.

Optionally in some examples, including in at least one preferred example, the first leading portion may have an enveloping surface provided with at least one fin. A technical benefit may include that such a fin may provide good anchorage as the first leading portion expands to the radially expanded state. Such a fin may, for instance, counteract a pull-out force, by being pressed against the structural element.

Optionally in some examples, including in at least one preferred example, the first expandable part may be made of a plastic material, wherein the second central part may be made of the same type of plastic material or a different type of plastic material as the first expandable part. A technical benefit may include that plastic materials may be cost efficient to produce and provide sufficient robustness for the intended function. In at least some examples, said plastic material may be reinforced with fibers, such as glass fibers. In at least some examples, the cable tie clip may be molded (such as injection molded). In particular, the first expandable part and the second central part may be molded (such as injection molded) in a common molding tool so that upon completion of the molding operation, the cable tie clip may be removed from the molding tool with the second central part already having its second leading portion extending axially through the first leading portion of the first expandable part. Other manufacturing methods are also conceivable. For instance, in at least some examples, the cable tie clip may be 3D-printed.

Optionally, in some examples, including in at least one preferred example, the first expandable part may have a first anti-rotation element, wherein the second central part may have a second anti-rotation element engaged with the first anti-rotation element, thereby counteracting rotation of the second central part relative to the first expandable part. A technical benefit may include that the tied down tubular object may hereby be prevented from rotating/turning (and thus you can maintain a good tightening force from the cable tie). An example of such anti-rotational elements may for example cooperating slit and rib (such as previously discussed), however, any other suitable elements may be conceivable, such as interacting teeth/cogs, etc.

Optionally in some examples, including in at least one preferred example, the opening of the second trailing portion may be at least partly defined by a convex surface which is configured to be subjected to a retracting force by the received cable tie. By allowing the received cable tie to be tightened against a convex surface, the risk of chafing of the cable tie may be reduced.

According to a second aspect of the disclosure, there is provided a vehicle comprising the cable tie clip according to the first aspect (including any example thereof). The second aspect of the disclosure may seek to address the corresponding matters and present the corresponding technical benefits as the first aspect (including any example thereof). The vehicle may for example be a heavy-duty vehicle such as a truck, a bus, or construction equipment.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** schematically illustrates a heavy-duty vehicle according to one example of this disclosure.
**FIGS. 2** and **3** schematically illustrate multiple tubular objects being tied down by a cable tie passed through a cable tie clip, in accordance with one example of this disclosure.
**FIGS. 4** and **5** schematically illustrate a large tubular object being tied down by a cable tie passed through a cable tie clip, in accordance with one example of this disclosure.
**FIG. 6** schematically illustrates, from a perspective view, a cable tie clip according to one example of this disclosure.
**FIG. 7** schematically illustrates, in a side view, the cable tie clip of **FIG. 6****.**
**FIG. 8** schematically illustrates, in a cross-sectional view, the cable tie clip of **FIGS. 6** and **7****.**
**FIGS. 9** and **10** schematically illustrate, in cross-sectional views, different states of a cable tie clip according to another example of this disclosure.
**FIG. 11** very schematically illustrates a tubular object tightened to the cable tie clip of **FIGS. 9** and **10****.**

### DETAILED DESCRIPTION

The detailed description set forth below provides information and examples of the disclosed technology with sufficient detail to enable those skilled in the art to practice the disclosure.

Cable ties are commonly used to tie down cables and hoses in vehicles. The operator often needs to push a cable tie holder through a hole of a structural element of a vehicle. The cable tie holder is generally tightly dimensioned relative to the hole, to ensure that it stays in place. This, however, requires quite a high push-in force from the operator. Installing multiple such cable tie holders can therefore result in an ergonomical problem for the operator, and if the operator fails to push in the cable tie holder properly, then there is a risk of the cable tie holder becoming loose over time. In accordance with the teachings of this disclosure, the drawbacks of the prior art may be overcome by providing a cable tie clip which can be easily pushed-in due to a relatively small initial radial extension, which can then be expanded to a larger radial extension during tightening of a cable tie. In particular, tightening of a cable tie may be used for causing a central part of the cable tie clip to become retracted and such retracting movement may be used for radially expanding a surrounding expanding part of the cable tie clip. Hereby, an easy yet secure installation is achievable.

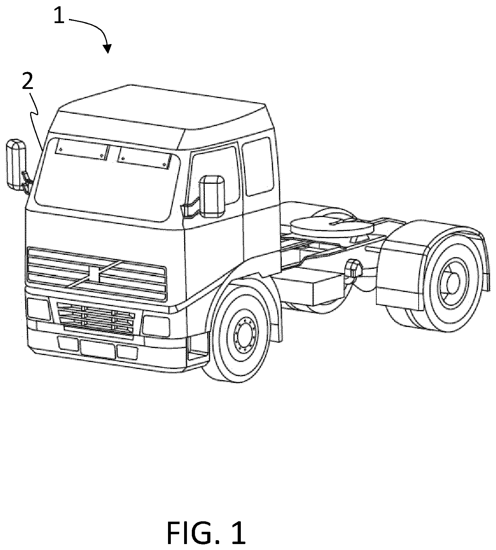

**FIG. 1** schematically illustrates a heavy-duty vehicle **1** according to one example of this disclosure. The exemplary illustration in **FIG. 1** shows a tractor unit for towing a trailer unit (not shown), which together make up a semitrailer vehicle. However, the teachings of this disclosure are applicable to other types of heavy-duty vehicles as well. For instance, the heavy-duty vehicle may be a different type of heavy-duty vehicle for cargo transport, such as a truck, or a truck with a dolly unit arranged to tow a trailer unit, etc. Other conceivable examples include a bus, construction equipment, etc. The heavy-duty vehicle **1** may, for instance, be an electric vehicle or a hybrid electric vehicle. The illustrated heavy-duty vehicle **1** comprises a cabin **2** in which a driver may operate the heavy-duty vehicle **1.** However, in other exemplary embodiments the heavy-duty vehicle **1** may be an autonomous, i.e., self-driving, heavy-duty vehicle.

The heavy-duty vehicle **1** may comprise a cable tie clip as disclosed herein (including any example thereof).

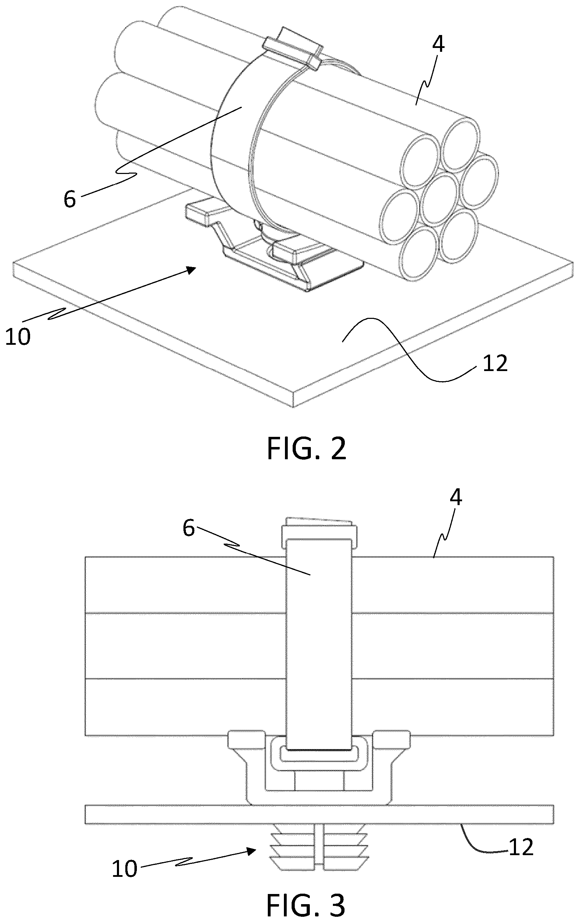

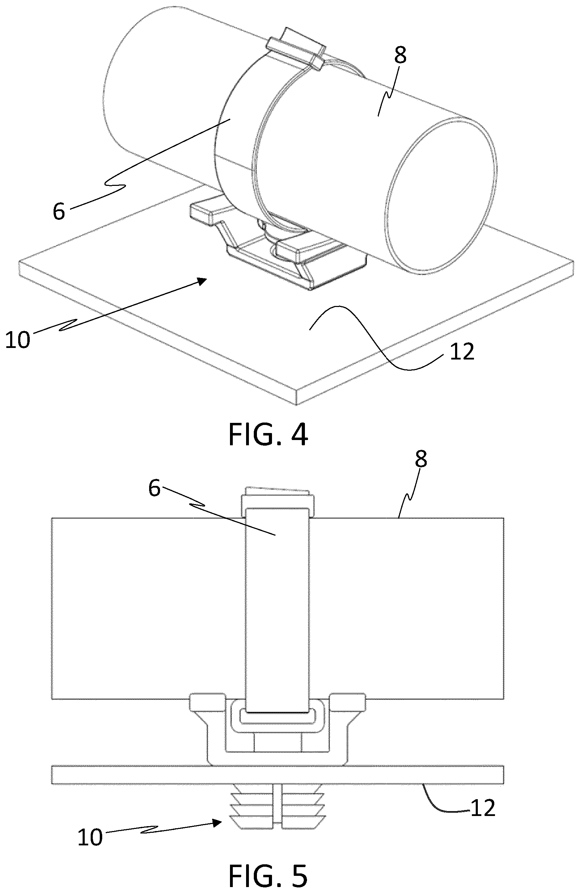

**FIGS. 2** and **3** schematically illustrate multiple tubular objects **4** being tied down by a cable tie **6** passed through a cable tie clip **10,** in accordance with one example of this disclosure. **FIGS. 4** and **5** schematically illustrate a large tubular object **8** being tied down by a cable tie **6** passed through a cable tie clip **10,** in accordance with one example of this disclosure. In each one of **FIGS. 2-5****,** a structural element **12** is schematically illustrated. The cable tie clip **10** penetrates through a hole (not visible in **FIGS. 2-5****)** of the structural element **12.**

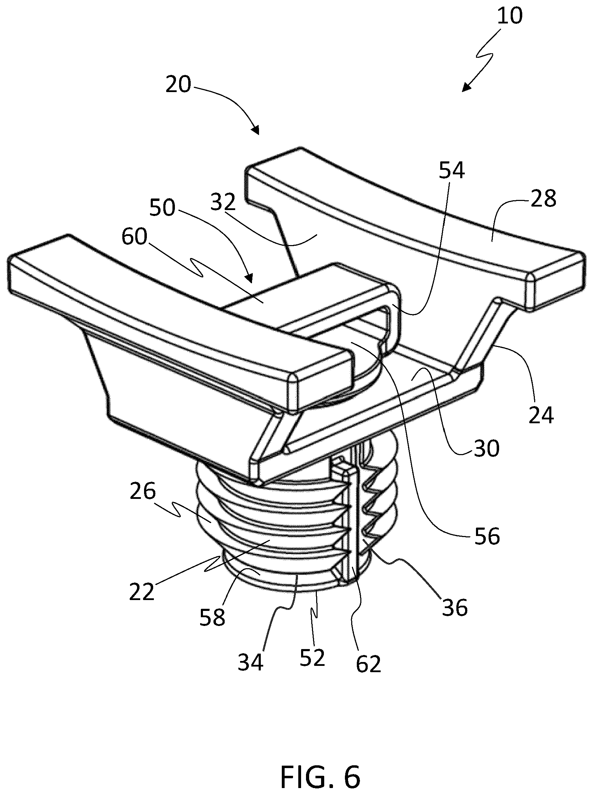

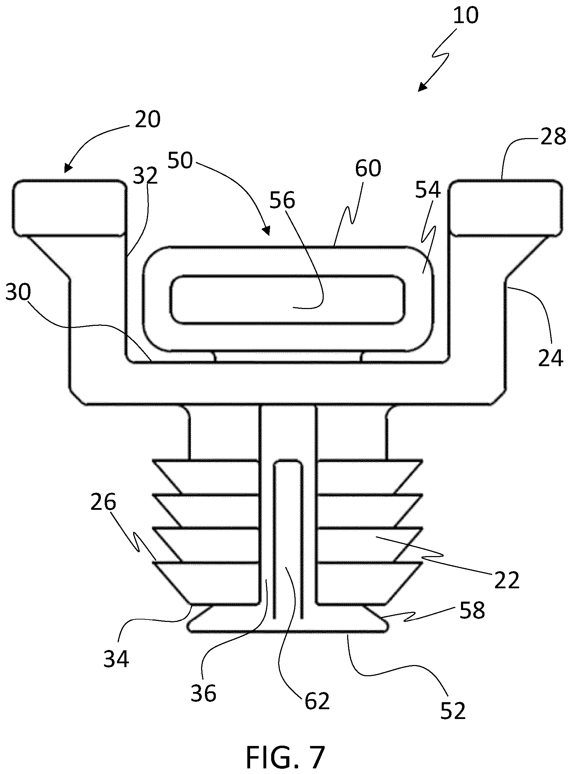

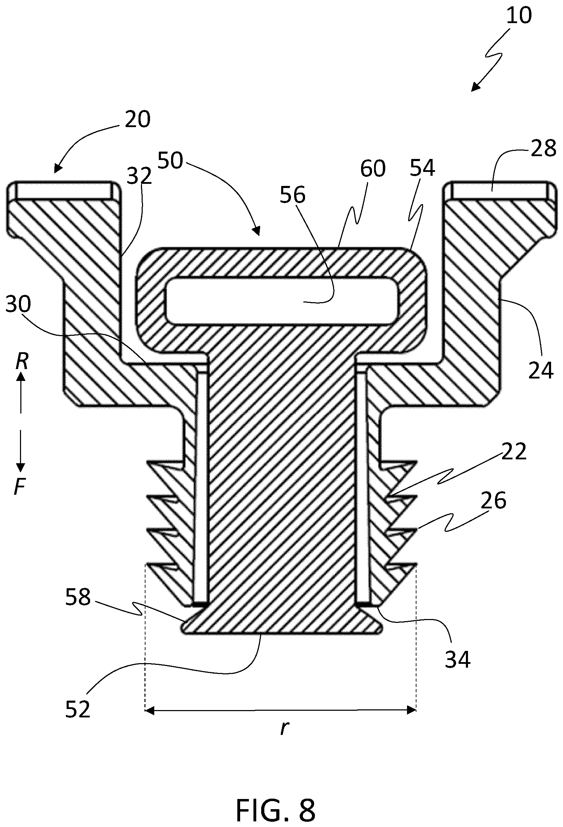

**FIG. 6** schematically illustrates, from a perspective view, a cable tie clip **10** according to one example of this disclosure. It may, for instance, correspond to the cable tie clip **10** shown in **FIGS. 2-5****.** **FIG. 7** schematically illustrates, in a side view, the cable tie clip **10** of **FIG. 6****.** **FIG. 8** schematically illustrates, in a cross-sectional view, the cable tie clip **10** of **FIGS. 6** and **7****.** The cable tie clip **10** is configured to receive a cable tie (such as the one illustrated in **FIGS. 2-5****)** for tying a tubular object to a structural element having a hole. Such a tubular object may, for example, be one or more cables (such as illustrated in **FIGS. 2-3****),** or one or more pipes (such as illustrated in **FIGS. 4-5****).**

With reference to **FIGS. 6-8****,** the cable tie clip **10** comprises a first expandable part **20** and a second central part **50.** As best seen in the cross-sectional view in **FIG. 8****,** the first expandable part **20** has a first leading portion **22.** The first leading portion **22** is configured to be inserted in an axial forward direction ***F*** through a hole of a structural element to which the cable tie clip **10** is to be installed. The first leading portion **22** is now shown in an initial state in which the first leading portion **22** has an initial radial extension ***r*.** As should be understood, any radial extension ***r*** of the first leading portion **22** is perpendicular to the axial forward direction ***F*** (and also perpendicular to the axial rearward direction ***R*).**

Continuing with **FIG. 8****,** the first expandable part **20** also has a first trailing portion **24.** As can be seen in the illustration, the first trailing portion **24** is considerably wider than the first leading portion **22,** i.e. the first trailing portion **24** has a larger radial extension than said initial radial extension ***r*** of the first leading portion **22.** It should thus be understood that the cable tie clip **10** should suitably be dimensioned so that the first leading portion **22** fits through the hole of the structural element to which the cable tie clip **10** is to be installed, whereas the first trailing portion **24** is overdimensioned relative to the hole and will therefore create a stop, preventing the cable tie clip **10** from further movement through the hole in the axial forward direction ***F*.** That the first trailing portion **24** is overdimensioned/oversized relative to the hole may mean that the first trailing portion **24** has an outer diameter or an extension that is larger than the diameter or extension of the hole. The term may also mean that a bottom surface or an outer surface of the first trailing portion **24** has an outer diameter or an extension that is larger than the diameter or extension of the hole. The term may also mean that at least a portion of a bottom surface or an outer surface of the first trailing portion **24** has an outer diameter or an extension that is larger than the diameter or extension of the hole, for example if a part of the first trailing portion **24** is configured to engage the hole as part of creating a stop.

As can also be clearly seen in **FIG. 8****,** the second central part **50** has a second leading portion **52** and a second trailing portion **54.** The second leading portion **52** extends axially through the first leading portion **22.** The second trailing portion **54,** which is located rearwardly of the first leading portion **22,** comprises an opening **56** (e.g. an eyelet). A cable tie can be passed through the opening **56.** A retracting force by the received cable tie can cause the second central part **50** to be retracted relative to the first expandable part **20.** In particular, when the cable tie is tightened around a tubular object received by the cable tie clip **10,** the second central part **50** can become retracted in the axial rearward direction ***R*.** Retraction of the second central part **50** causes the second leading portion **52** to radially expand the first leading portion **22** from the illustrated initial state to a radially expanded state. In the radially expanded state the first leading portion **22** will thus have a larger radial extension than the illustrated initial radial extension ***r*.**

The cause-and-effect relationship between the retraction of the second central part 50 and the expansion of the first expanding part **20** can be understood from **FIG. 8****.** Here the second leading portion **52** is illustrated as having a forwardly and radially flaring section **58.** It can thus be understood that retraction of the second central part **50** (i.e. moving the second central part **50** in the axial rearward direction ***R*)** causes the forwardly and radially flaring section **58** to press the first leading portion **22** from the initial state to the radially expanded state. It should, however, be understood that such a cause-and-effect relationship can be achieved in other ways as well. For instance, instead of, or in addition to, having a forwardly and radially flaring section **58** on the second central part **50,** the first expandable part **20,** in particular the first leading portion **22,** may have an internal geometry that presents a forwardly and radially flaring surface. In either case, as the second central part **50** is moved rearwards, the first leading portion **22** will gradually expand. The expansion should be such that the first leading portion **22** in the radially expanded state is overdimensioned relative to the hole, thus preventing pull-out of the first leading portion **22** from the hole. By this configuration, an easy yet secure installation is achieved. Furthermore, since the tightening of the cable tie causes the retracting movement, there is no need for a separate retracting action to be performed, as that action can automatically follow by the tightening of the cable tie.

As seen in **FIG6****. 6-8** the enveloping surface of the first leading portion may be provided with at least one fin **26.** In the illustrated example, there are multiple rows of fins **26** extending circumferentially along the enveloping surface. The fins **26** may contribute to providing an anchoring effect, counteracting pull-out of the first leading portion **22.** However, in other examples, the fins **26** may be omitted, and radial expansion of the first leading portion **22** may suffice to provide satisfactory anchoring effect.

With reference to FIGS. **6-8****,** the first trailing portion **24** has an object-supporting surface **28** configured to receive a tubular object to be tied to the structural element. The second trailing portion **54** has a trailing end **60** which presents the most rearward surface of the second trailing portion **54.** As can be seen in these figures, the entire object-supporting surface **28** is located rearwardly of the trailing end **60** of the second trailing portion **54.** This axial separating distance between the object-supporting surface **28** and the trailing end **60** of the second trailing portion **54** allows a lever effect to be achieved. When a cable tie is tightened, continued tightening will cause the lever to pull the second central part **50** in the axial rearward direction ***R*.** Although **FIGS. 6-8** have illustrated that the entire object-supporting surface **28** is located rearwardly of said trailing end **60,** it should be understood that in other examples it may be conceivable to have at least one area of the object-supporting surface **28** located rearwardly of the trailing end **60** of the second trailing portion **54.**

The first trailing portion **24** may also have a trailing end that presents the most rearward surface of the first trailing portion **24.** As illustrated in **FIGS. 6-8** and as can be understood from **FIGS. 2-5****,** the object-supporting surface **28** can be said most rearward surface of the first trailing portion **24.**

Thus, from what has been discussed so far in relation to **FIGS. 6-8****,** it can be understood that tightening of a tubular object that has been received on the object-supporting surface **28** (by using a cable tie received through the opening **56** of the second trailing portion **54)** allows the second central part **50** to become retracted in the axial rearward direction ***R*.** Because there will be at least one tubular object on the object-supporting surface **28,** it can be understood that the retraction of the second central part **50** may be to an extent that the object-supporting surface **28** remains located rearwardly of the trailing end **60** of the second trailing portion **54** or to an extent that the trailing end **60** of the second trailing portion **54** becomes levelled with the object-supporting surface **28.**

**FIGS. 6-8** also show that the first trailing portion **24** may comprise an intermediate base section **30** arranged between two rearwardly projecting wall sections **32.** The second central part **50** extends axially through the intermediate base section **30.** In the geometrical plane seen in the cross-sectional view of **FIG. 8****,** it can be seen that the first trailing portion **24** presents a U-shaped cross-section (although other cross-sections are also conceivable, such as a V-shape). The two rearwardly projecting wall sections **32** represent the legs of the U-shape and the intermediate base section **30** represents the base of the U-shape. The opening **56** of the second trailing portion **54** is facing a direction which is perpendicular to said geometrical plane.

The first leading portion **22** may have a leading end **34** which presents the most forward surface of the first leading portion **22.** As can be seen in **FIGS. 6** and **7****,** the first leading portion **22** may be provided with at least one slit **36,** such as two or more slits, extending from the leading end **34** in the axial rearward direction ***R*.** Furthermore, the second leading portion **52** may be provided with a rib **62** that engages the slit **36.** Such a rib **62** and slit **36** combination may represent an anti-rotational stop function. Thus, in general terms, the first expandable part **20** may have a first anti-rotation element (for example a slit **36)** and the second central part **50** may have a second anti-rotation element (for example a rib **62),** wherein the second anti-rotation element is engaged with the first anti-rotation element, thereby counteracting rotation of the second central part **50** relative to the first expandable part **20.** Hereby, when a tubular object has been tied down, it will not be allowed to turn (i.e. will not be allowed to loosen the tightening force of the cable tie).

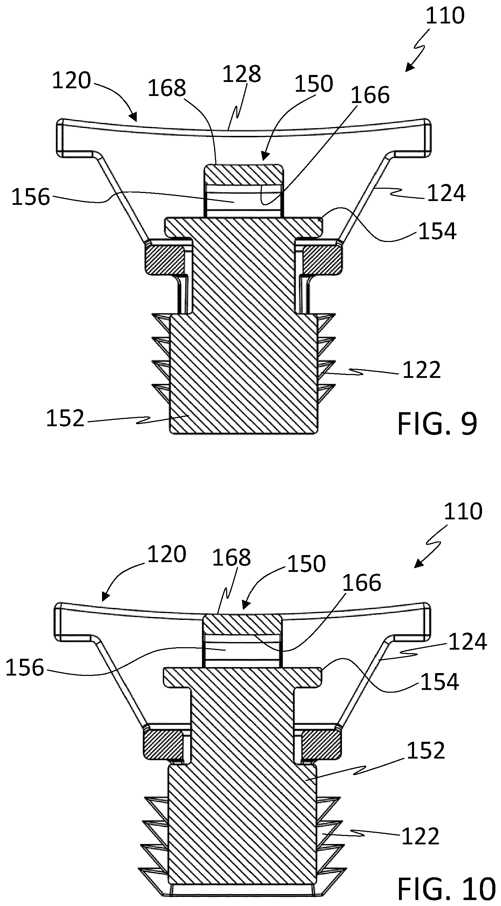

As best seen in **FIG. 6****,** the object-supporting surface **28** may suitably be concave to improve the holding of the one or more tubular objects. As will be shown in relation to **FIGS. 9-11****,** in at least some examples, not only the first expandable part **20** may present an object-supporting surface **28,** but also the second central part **50** may present an object-supporting surface, in particular a concave object-supporting surface.

Thus, turning now to **FIGS. 9-11****,** there is illustrated a cable tie clip **110** according to another example of this disclosure. **FIG. 9** illustrates a cross-sectional view of the cable tie clip **110,** the first leading portion **122** (i.e. of the first expandable portion **120)** being in its initial state. The second leading portion **152** (i.e. of the second central part **150)** is still in an advanced forwardly positioned location. Thus, **FIG. 9****,** illustrates the cable tie clip **110** before, during and right after insertion through a hole of a structural element. **FIG. 10** illustrates a cross-sectional view of the cable tie clip **110,** the first leading portion **122** being in a radially expanded state. The second leading portion **152** has now been retracted, causing the first leading portion **122** to expand radially, so as to provide an anchoring of the cable tie clip **110,** and preventing pull-out thereof from the hole of the structural element. It should be noted that the cross-sectional views of **FIGS. 9** and **10****,** not only show a different cable tie clip **110** compared to the cross-sectional view of **FIG. 8****,** but these views are also oriented at 90° relative to the view in **FIG. 8****.**

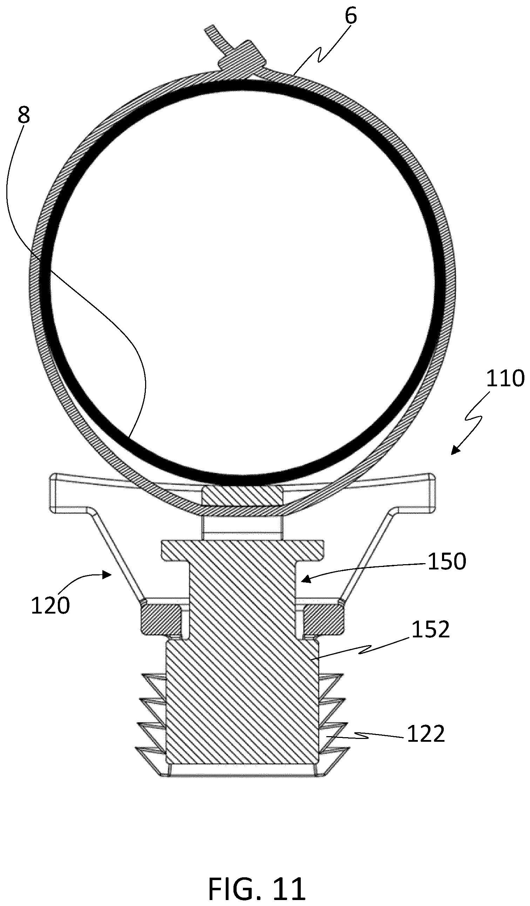

**FIG. 11** very schematically illustrates a tubular object **8** tightened by a cable tie **6** to the cable tie clip **110** of **FIGS. 9** and **10****,** and the 90° change of orientation can readily be understood when comparing the orientation of the tubular object **8** and cable tie **6** shown in **FIG. 11** with the orientation shown in, for example, **FIG. 4****.**

As can be seen in **FIGS. 9-10****,** apart from a first object-supporting surface **128** presented by the first trailing portion **124** (of the first expandable part **120),** the most rearward surface of the second trailing portion **154** (of the second central part **150)** may present a second object-supporting surface **168.** As can be understood from **FIGS. 9-10****,** the second object-supporting surface **168** will initially not provide support to the tubular object **(****FIG. 9****),** however, when the cable tie has been well tightened and the second central part **150** has been retracted, then the second object-supporting surface **168** will assist in supporting the tubular object. As seen in the figures, the second object-supporting surface **168,** may suitably be concave. In particular, the second object-supporting surface **168** may be retracted to a position in which it is flush with (at least one area of) the first object-supporting surface **128,** and may present a concavity having the same radius of curvature as the concavity presented by (said at least one area of) the first object-supporting surface **128.**

As can also be seen in **FIGS. 9-10****,** the opening **156** of the second trailing portion **154** may suitably be at least partly defined by a convex surface **166** which is configured to be subjected to a retracting force by the received cable tie. Thus, when the cable tie is tightened, the roundness (i.e. the convex surface **166)** will reduce the risk of chafing the cable tie and provide a longer contact surface with the cable tie.

In the following, some examples of the cable tie clip and related aspects of this disclosure will be presented.

Example 1: A cable tie clip configured to receive a cable tie for tying a tubular object, such as a cable or a pipe, to a structural element having a hole, the cable tie clip comprising:
- a first expandable part having a first leading portion and a first trailing portion, wherein the first leading portion is configured to be inserted in an axial forward direction through the hole of the structural element, the first leading portion being provided in an initial state in which the first leading portion has an initial radial extension, wherein the first trailing portion has a larger radial extension than said initial radial extension of the first leading portion,
- a second central part having a second leading portion and a second trailing portion, wherein the second leading portion extends axially through the first leading portion, wherein the second central part is retractable in an axial rearward direction which is opposite to said axial forward direction, wherein the second trailing portion comprises an opening enabling a cable tie to be passed through the opening and enabling a retracting force by the received cable tie to cause the second central part to be retracted relative to the first expandable part, wherein retraction of the second central part causes the second leading portion to radially expand the first leading portion from said initial state to a radially expanded state in which the first leading portion has a larger radial extension than said initial radial extension.

Example 2: The cable tie clip of example 1, wherein the first trailing portion has an object-supporting surface configured to receive a tubular object to be tied to the structural element, wherein the second trailing portion has a trailing end which presents the most rearward surface of the second trailing portion, wherein the entire object-supporting surface, or at least one area of the object-supporting surface, is located rearwardly of the trailing end of the second trailing portion.

Example 3: The cable tie clip of example 2, wherein the first trailing portion has a trailing end which presents the most rearward surface of the first trailing portion, wherein the object-supporting surface is said most rearward surface of the first trailing portion.

Example 4: The cable tie clip of any one of examples 2-3, wherein tightening of a tubular object received on said object-supporting surface, by a cable tie received through the opening of the second trailing portion, allows the second central part to become retracted in the axial rearward direction to an extent that the object-supporting surface remains located rearwardly of the trailing end of the second trailing portion or to an extent that the trailing end of the second trailing portion becomes levelled with the object-supporting surface.

Example 5: The cable tie clip of any one of examples 2-4, wherein said object-supporting surface is concave.

Example 6: The cable tip clip of example 5, wherein said object-supporting surface of the first trailing portion is a first object-supporting surface, wherein the most rearward surface of the second trailing portion presents a second object-supporting surface, wherein the second object-supporting surface is concave and configured to contribute to supporting a tubular object supported by the first object-supporting surface.

Example 7: The cable tie clip of example 6, wherein, upon retraction of the second central part causing the second leading portion to radially expand the first leading portion, the second object-supporting surface is retracted to a position in which it is flush with at least one area of the first object-supporting surface, wherein the second object-supporting surface presents a concavity having the same radius of curvature as the concavity presented by said at least one area of the first object-supporting surface.

Example 8: The cable tie clip of any one of examples 1-7, wherein the first trailing portion comprises an intermediate base section arranged between two rearwardly projecting wall sections, wherein the second central part extends axially through the intermediate base section.

Example 9: The cable tie clip of example 8, wherein, in a geometrical plane through the first trailing portion, the first trailing portion presents a U-shaped cross-section, the two rearwardly projecting wall sections representing the legs of the U-shape and the intermediate base section representing the base of the U-shape, wherein the opening of the second trailing portion is facing a direction which is perpendicular to said geometrical plane.

Example 10: Th cable tie clip of any one of examples 1-8, wherein at least one of the first and second leading portions is provided with a forwardly and radially flaring section, wherein retraction of the second central part causes said radially flaring section to press or to be pressed, causing the first leading portion to move radially from said initial state to said radially expanded state.

Example 11: The cable tie clip of any one of examples 1-10, wherein the second leading portion is provided with a forwardly and radially flaring section, wherein retraction of the second central part causes said forwardly and radially flaring section to press the first leading portion radially from said initial state to said radially expanded state.

Example 12: The cable tie clip of any one of examples 1-11, wherein the first leading portion has a leading end which presents the most forward surface of the first leading portion, wherein the first leading portion is provided with at least one slit, such as at least two slits, extending from said leading end in the axial rearward direction.

Example 13: The cable tie clip of example 12, wherein the second trailing portion is provided with a radially extending rib which fits into said at least one slit, creating an anti-rotational stop (and/or enabling an axial guiding during tightening of the cable tie and retraction of the second central part).

Example 14: The cable tie clip of any one of examples 1-13, wherein the first leading portion has an enveloping surface provided with at least one fin.

Example 15: The cable tie clip of any one of examples 1-14, wherein the first expandable part is made of a plastic material, wherein the second central part is made of the same type of plastic material or a different type of plastic material as the first expandable part.

Example 16: The cable tie clip of any one of examples 1-15, wherein the cable tie clip may be molded (such as injection molded), in particular, the first expandable part and the second central part are molded (such as injection molded) in a common molding tool so that upon completion of the molding operation, the cable tie clip is removable from the molding tool with the second central part already having its second leading portion extending axially through the first leading portion of the first expandable part.

Example 17: The cable tie clip of any of examples 1-16, wherein the first expandable part has a first anti-rotation element, wherein the second central part has a second anti-rotation element engaged with the first anti-rotation element, thereby counteracting rotation of the second central part relative to the first expandable part.

Example 18: The cable tie clip of any one of examples 1-17, wherein the opening of the second trailing portion is at least partly defined by a convex surface which is configured to be subjected to a retracting force by the received cable tie.

Example 19: A cable tie clip arrangement comprising a cable tie clip according to any one of examples 1-18 and a cable tie.

Example 20: A vehicle comprising the cable tie clip according to any one of examples 1-18 or the cable tie clip arrangement according to example 19.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. **In** contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A cable tie clip configured to receive a cable tie for tying a tubular object, such as a cable or a pipe, to a structural element having a hole, the cable tie clip comprising:
- a first expandable part having a first leading portion and a first trailing portion, wherein the first leading portion is configured to be inserted in an axial forward direction through the hole of the structural element, the first leading portion being provided in an initial state in which the first leading portion has an initial radial extension, wherein the first trailing portion has a larger radial extension than said initial radial extension of the first leading portion,
- a second central part having a second leading portion and a second trailing portion, wherein the second leading portion extends axially through the first leading portion, wherein the second central part is retractable in an axial rearward direction which is opposite to said axial forward direction, wherein the second trailing portion comprises an opening enabling a cable tie to be passed through the opening and enabling a retracting force by the received cable tie to cause the second central part to be retracted relative to the first expandable part, wherein retraction of the second central part causes the second leading portion to radially expand the first leading portion from said initial state to a radially expanded state in which the first leading portion has a larger radial extension than said initial radial extension.

2. The cable tie clip of claim 1, wherein the first trailing portion has an object-supporting surface configured to receive a tubular object to be tied to the structural element, wherein the second trailing portion has a trailing end which presents the most rearward surface of the second trailing portion, wherein the entire object-supporting surface, or at least one area of the object-supporting surface, is located rearwardly of the trailing end of the second trailing portion.

3. The cable tie clip of claim 2, wherein the first trailing portion has a trailing end which presents the most rearward surface of the first trailing portion, wherein the object-supporting surface is said most rearward surface of the first trailing portion.

4. The cable tie clip of any one of claims 2-3, wherein tightening of a tubular object received on said object-supporting surface, by a cable tie received through the opening of the second trailing portion, allows the second central part to become retracted in the axial rearward direction to an extent that the object-supporting surface remains located rearwardly of the trailing end of the second trailing portion or to an extent that the trailing end of the second trailing portion becomes levelled with the object-supporting surface.

5. The cable tie clip of any one of claims 2-4, wherein said object-supporting surface is concave.

6. The cable tip clip of claim 5, wherein said object-supporting surface of the first trailing portion is a first object-supporting surface, wherein the most rearward surface of the second trailing portion presents a second object-supporting surface, wherein the second object-supporting surface is concave and configured to contribute to supporting a tubular object supported by the first object-supporting surface.

7. The cable tie clip of claim 6, wherein, upon retraction of the second central part causing the second leading portion to radially expand the first leading portion, the second object-supporting surface is retracted to a position in which it is flush with at least one area of the first object-supporting surface, wherein the second object-supporting surface presents a concavity having the same radius of curvature as the concavity presented by said at least one area of the first object-supporting surface.

8. The cable tie clip of any one of claims 1-7, wherein the first trailing portion comprises an intermediate base section arranged between two rearwardly projecting wall sections, wherein the second central part extends axially through the intermediate base section.

9. The cable tie clip of claim 8, wherein, in a geometrical plane through the first trailing portion, the first trailing portion presents a U-shaped cross-section, the two rearwardly projecting wall sections representing the legs of the U-shape and the intermediate base section representing the base of the U-shape, wherein the opening of the second trailing portion is facing a direction which is perpendicular to said geometrical plane.

10. The cable tie clip of any one of claims 1-9, wherein the second leading portion is provided with a forwardly and radially flaring section, wherein retraction of the second central part causes said forwardly and radially flaring section to press the first leading portion radially from said initial state to said radially expanded state.

11. The cable tie clip of any one of claims 1-10, wherein the first leading portion has a leading end which presents the most forward surface of the first leading portion, wherein the first leading portion is provided with at least one slit, such as at least two slits, extending from said leading end in the axial rearward direction.

12. The cable tie clip of any one of claims 1-11, wherein the first leading portion has an enveloping surface provided with at least one fin.

13. The cable tie clip of any one of claims 1-12, wherein the first expandable part has a first anti-rotation element, wherein the second central part has a second anti-rotation element engaged with the first anti-rotation element, thereby counteracting rotation of the second central part relative to the first expandable part.

14. The cable tie clip of any one of claims 1-13, wherein the opening of the second trailing portion is at least partly defined by a convex surface which is configured to be subjected to a retracting force by the received cable tie.

15. A vehicle comprising the cable tie clip according to any one of claims 1-14.
